# EUROPEAN PATENT SPECIFICATION

(11) **EP 2 606 745 B1**
(45) Date of publication and mention of the grant of the patent: **06.08.2014**
(21) Application number: 11194683.6
(22) Date of filing: 20.12.2011
(51) Int. Cl.: A23L 1/176

(54) **Crumb manufacture**
Krumenherstellung
Fabrication de mie de pain

(43) Date of publication of application: 26.06.2013
(73) Proprietor: Crisp Sensation Holding SA, 1208 Geneva (CH)
(72) Inventor: Pickford, Keith, Manchester, M45 7QF (GB); van Doorn, Kees, 5036 CL Tilburg (NL); Reichgelt, Carry, 5561 TV Riethoven (NL)
(74) Representative: Browne, Robin Forsythe

(56) References cited:
- WO-A1-99/44439
- WO-A1-2006/082804
- WO-A2-2010/001101
- US-A- 4 364 961
- US-A- 4 440 793
- US-A- 4 767 637
- US-A- 5 321 900

## Description

This invention relates to a process for manufacture of crumb. The invention also relates to crumb manufactured by the process and food products coated with the crumb. The invention relates particularly, but not exclusively, to crumb which includes a hydrocolloid or other gelling agent in order to impart water resistant characteristics.

Conventional breadcrumb may have a water content of about 4% to 12% and becomes soggy immediately upon immersion into water. Such crumb is inevitably for use in moist environments, particularly for coating microwaveable products.

WO99/44439 describes a process for manufacture of breadcrumb by extrusion of a dough mixture incorporating a gelling agent, particularly a hydrocolloid, to form pellets which are dried and milled. WO2010/001101 discloses a process wherein crumb is extruded with a gelling agent and dried to a moisture content of 2% or is dried in a fluid bed dryer at around 90°C for fifteen minutes. Use of a fluid bed dryer may be undesirable due to creation of a large amount of airborne dust. Fluid bed dryers are designed to dry products as they float on a cushion of air or gas. The air or gas used in the process is supplied to the bed through a special perforated distributor plate and flows through the bed of solids at a velocity sufficient to support the weight of particles in the fluidised state. Bubbles form and collapse within the fluidised bed of material promoting intense particle movement.

According to a first aspect of the present invention, a method of manufacture of a crumb comprises the steps of:
extruding a dough composition comprising flour, a gelling agent, optional further ingredients and water to form an extruded composition, wherein the gelling agent is uniformly distributed throughout the composition;
drying the extruded composition in a rotary dryer to form a dried composition, wherein the water content of the dried composition is from about 0.1% to about 1.5% by weight; and
milling the dried composition to form a crumb with a water content of about 0.1% to about 1.5% by weight.

The present method offers the advantage that it enables the manufacture of a crumb with an extremely low moisture content without the need for substantial energy input. Furthermore, the method achieves such very low moisture content without significant adverse effect on product quality. Alternative drying techniques would typically achieve such very low moisture content at the cost of e.g. heat induced defects. The crumb according to the present invention offers the advantage that it is substantially more water resistant than crumb having a moisture level of about 2.0 wt% and/or crumb that does not contain a gelling agent. The high water resistance of the crumb obtained by the present method is particularly beneficial if this crumb is used in the manufacture of coated food products that are distributed in frozen form and that have to be heated before consumption.

Percentages and other quantities referred to in this specification are by weight, unless indicated otherwise.

In a preferred embodiment the rotary dryer comprises an inlet; an outlet; a passageway for the extruded composition; the passageway extending between the inlet and outlet; one or more drying units each comprising a perforated cylindrical tube extending between the inlet and outlet and a screw extending axially of the tube, wherein one of the tube and the screw are rotatable to move extruded composition from the inlet to the outlet; and means for circulating drying air through the passageway.

The rotary dryer may comprise at least four drying units assembled in a rotary cage located within a closed housing.

The apertures in the perforated cyclindrical tubes are selected to be smaller than at least 90 wt% of the particles of the extruded composition. Preferably the dimension of the apertures in the perforated cylindrical tube is in the range of about 1mm to about 5mm.

The extruded composition is preferably dried in the rotary dryer using a countercurrent hot air stream. The countercurrent hot air stream typically has a temperature of 100°C.-160°C, more preferably of 130°C-150°C, most preferably about 140°C. Flow rates of hot air employed in the present method are typically in the range of .about 6 to about 15 m/s, preferably of 8-10 m/s.

This invention utilises a gelling agent, particularly a hydrocolloid, dispersed uniformly in a rigid extruded farinaceous matrix structure which when dried to a water content of 1.5% by weight or lower reduces hydration and swelling of the hydrocolloid upon exposure to moisture thus creating a water resistant barrier. The farinaceous matrix advantageously compriseslow gluten wheat flour.

Without wishing to be bound by theory it is believed that upon exposure to moisture the gelling agent hydrates at the surface of the crumb or elsewhere in contact with moisture but cannot expand within the structure of the crumb. This may result in formation of a barrier to passage of water into the body of the crumb.

Preferably the particles have a maximum dimension between dust having a dimension of about 0.1 mm and about 5 mm. Crumb having a substantial absence of fine particles or dust may be used for outer coating of products. The dust may be used in the coating process as a predust or as an infill between larger particles.

Preferably, the water content of the dried composition and crumb is from about 0.3% to about 1%, more preferably about 0.5% to about 1%, most preferably about 0.5% to about 0.6%.

Crumb made by the method of this invention has the advantage of moisture resistance during cooking or reheating in a thermal, microwave or combined thermal and microwave oven. The crumb finds particular application for use in products which are frozen for storage before use. Uniform distribution of the gelling agent, especially a hydrocolloid, throughout the crumb imparts water resistance to the entire body of the crumb, and not to a superficial outer layer which may become damaged in use.

Reduction of the water content of the crumb below 1.5% confers an unexpected degree of moisture resistance to the crumb. Thus, the crumb can be used to produce a crumb coated food product which is crisp and has a crunchy texture. Without wishing to be bound by theory, it is believed that reduction of the water content as claimed reduces the rate of re-hydration of the gelling agent in contact with water, prolonging the period during which the crumb remains crisp. This is particularly important in crumb coated microwaveable products because steam emitted from the core of the product passes through the coating, making conventional crumb coated products soggy and unpalatable. The very low water content of the crumb further provides the unexpected advantage that the crumb exhibits a low pick-up of oil during frying.

The gelling agent is preferably a hydrocolloid which forms a gel or otherwise increases in viscosity when mixed with water. Preferred hydrocolloids produce a milled extrudate which retains shape when stirred in water having a temperature of 20°C for a period of 60 seconds. The hydrocolloid provides a degree of water resistance reducing any tendency to pick up moisture from adjacent layers of the food product or surrounding materials. Typically, hydrocolloid is contained in the milled extrudate in a concentration of about 0.06% to about 4%, more preferably about 0.08% to about 3%, and most preferably about 0.1% to about 3% by weight.

Examples of hydrocolloids that may be used include natural gums, modified gums, gelatin, pectin, alginate, arabinogalactan, agar, carrageenan, furcellaran, modified starch and combinations thereof. Preferably the hydrocolloid is selected from natural gums and combinations thereof.

Examples of natural gums that may be suitably employed include guar gum, locust bean gum, gum Arabic, tragacanth, gum karaya, gum ghatti, xanthan gum and combinations thereof.

Most preferably, the hydrocolloid is selected from guar gum, locust bean gum, xanthan gum and combinations thereof.

The extrudate may be cut into pieces upon discharge from the extruder in order to form pieces of solid farinaceous material. Preferably the pieces may expand to form rounded pellets or beads suitable for passage through a dryer before milling. The beads may have a maximum dimension of 0.5 cm to 1 cm.

The extruded composition obtained in the present method typically has a water content of about 30 wt%.

Extruded crumb may be manufactured as disclosed in WO2010/001101, the disclosure of which is incorporated into this specification by reference for all purposes.

In a preferred embodiment the dryer comprises an inlet, an outlet, a passageway for pieces of extrudate, the passageway extending between the inlet and the outlet, means for circulating drying air through the passageway and means for mixing the pieces of the extrudate during passage through the passageway; wherein the passageway comprises a perforated cylindrical tube extending between the inlet and outlet;
apertures in the tube having a maximum dimension arranged to retain extrudate particles within the tube;
the means for mixing comprising a screw extending axially of the tube; and
one of the tube and screw being rotatable to move extrudate from the inlet to the outlet.

Preferably, the screw remains stationary as the tube rotates. Alternatively, the screw may rotate within a stationary tube. Rotation of the tube is preferred to cause thorough mixing of the extrudate particles during passage along the tube. Use of the apparatus in accordance with this aspect of the invention is advantageous because the particles are mixed by tumbling rather than application of a mechanical mixer. This reduces breakage of the particles and consequent formation of dust.

The tube may be constructed from wire mesh or perforated sheet material having apertures sufficiently small to retain the extrudate pieces. Dust or fine particles are separated from the pieces by being allowed to fall through apertures in the rotating tube into a collector at a lower part of the apparatus. For example a trough may be provided with an Archimedes screw for carrying dust out of the apparatus. Rotation of the tube has the advantage of agitating the dust or fine particles, promoting flow of the latter through the apertures in the tube, providing convenient separation of the fines from the pieces of extruded composition.

In particularly advantageous embodiments, a multiplicity of tubes are mounted in a dryer chamber, ventilation means being provided to circulate dry heated air within the chamber. Heat exchangers may be used to heat the air passing into or within the chamber.

A vibratory feeder may be used to introduce extrudate into the or each tube. A vibratory collector may be used to collect the dried extrudate.

The dryer chamber may be divided into two or more zones maintained at different temperatures or humidities. A first zone may be at a higher temperature, for example in the range from about 120°C to about 160°C, preferably about 130°C to about 150°C, more preferably about 140°C. A second zone may be at a lower temperature, for example in the range from about 80°C to about 140°C, preferably about 90°C to about 120°C, more preferably about 100°C. The dwell time in the dryer may be about 45 minutes to 90 minutes, preferably about 60 minutes.

Another aspect of the invention relates to a crumb comprising milled farinaceous particles of an extruded composition comprising flour, a gelling agent uniformly distributed throughout the crumb and optional further ingredients, wherein the total water content of the crumb is from about 0.1% to about 1.5% by weight, more preferably from about 0.3% to about 1%, even more preferably about 0.5% to about 1%, most preferably about 0.5% to about 0.6%.

Preferred embodiments of the present crumb have already been discussed above in relation to the manufacturing method.

The aforementioned crumb is preferably obtainable by the method described herein. Most preferably, the crumb is obtained by said method.

The invention is further described by means of example, but not in any limitative sense, with reference to the accompanying drawings of which:-
Figure 1 is a schematic view of drying apparatus for use in accordance with the invention; and
Figure 2 is a cross-sectional view of a dryer for use in accordance with this invention.

### EXAMPLES

### Example 1.

A flour composition was prepared from the following ingredients as follows:

| | |
|---|---|
| Flour mixture | 96.4% |
| Sodium bicarbonate (Bex baking powder) | 2.0% |
| Glyceryl Monostearate (Abimono SS40P) | 0.6% |
| Salt | 1.0% |
| | 100.0% |

A gelling composition was prepared from the following ingredients::

| | |
|---|---|
| Guar gum | 67.00% |
| Sodium metabisulphite | 33.00% |
| | 100.00% |

The gelling composition was hydrated at 3% w/w in 97% water. This can be done using a paddle mixer but a high shear mixer is preferred. The hydrated mixture was left to stand for at least 12 hours after mixing.

The flour composition (150kg per hour) was mixed with water (35kg per hour) to form a slurry. The slurry was fed into a Clextral™ twin-screw extruder was used (alternatively a Buhler™ twin-screw extruder may be used). The hydrated gelling composition was injected into the extruder barrel in an amount of 7.5% (13.88 kg per hour). The resultant extruded mixture was chopped into pieces and allowed to expand to form bubble-shaped pieces having a typical maximum dimension of 0.5 cm to 1.0 cm.

### Example 2

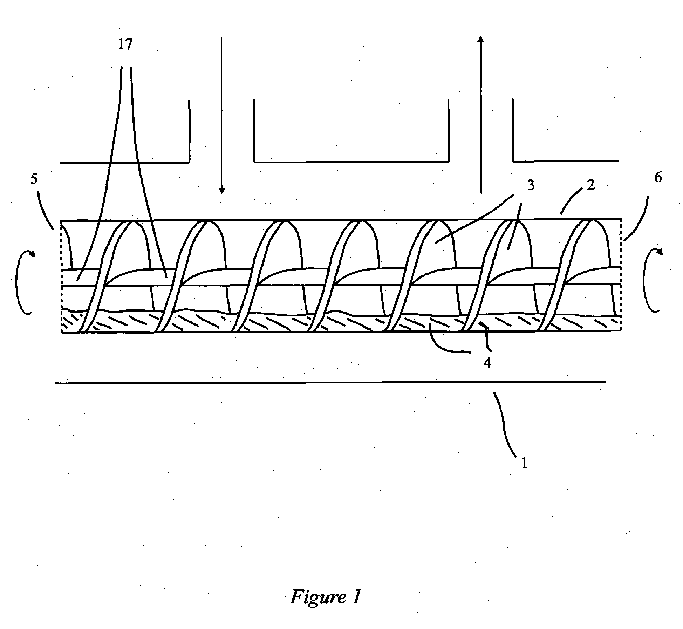

The bubble-shaped pieces of extrudate were fed into the input of a dryer as shown schematically in Figure 1.

The dryer comprised an outer casing (1) defining a chamber containing twelve gauze tubes (2) each having a diameter of about 30 centimetres and a length of about 11.5 metres. An Archimedes screw (3) with 57 turns and a pitch of 30 centimetres for each turn extends coaxially within each tube (2) adjacent the inner surface of the tube. The tubes are connected by a drive mechanism to a motor (not shown) and are arranged to rotate around the stationary Archimedes screws (3). Tumbling of crumb particles (4) against the surface of the screw causes the particles to move along the tubes from the inlet (5) to the outlet (6).

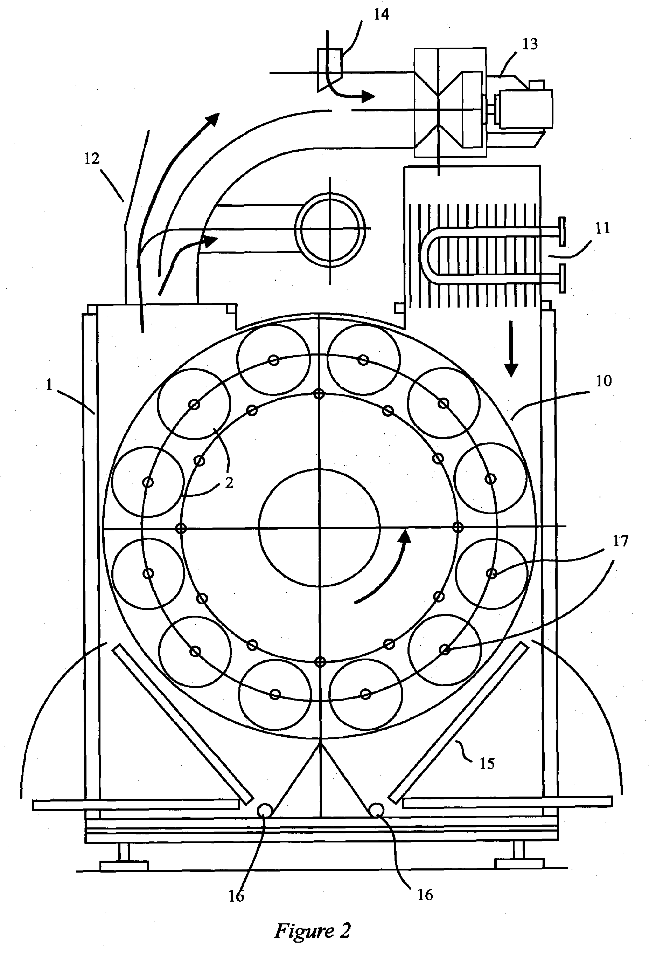

Figure 2 is a cross-sectional view of the dryer. The casing (1) encloses an array of twelve or other convenient number of cylindrical tubes (2) arranged in a cylindrical array (10) for rotation in the casing about a longitudinal axis. A drive mechanism (not shown), for example a chain drive, causes the tubes (2) to rotate about the axes (17) of Archimedes screws (3) (as shown in Figure 1). A heat exchanger (11) provides heated air for circulation within the casing (1). Air is removed from an outlet (12) by a pump (13), arranged to recirculate air together with fresh air from inlet (14) to the heat exchanger (11).

Collector plates (15) located at a lower portion of the casing (1) beneath the array (10) of cylindrical tubes collects dust or other fines falling from the cylindrical tubes. Archimedes screws (16) serve to collect the dust and fines for delivery to an outlet (not shown).

An outer casing includes a chamber and an air circulation system including a heat exchanger to provide dry heated air.

The chamber is divided into two or more zones. A first zone may be maintained at a first higher temperature, for example about 140°C and a second zone may be maintained at a second lower temperature, for example about 100°C. Any convenient number of zones may be maintained at temperatures selected to provide an efficient drying profile to suit the dimensions and principal characteristics of the particles.

Each tube may have a diameter of 30 cm and may surround a coaxial screw with a pitch of 30 cm.

The retention time within the dryer may be adjusted by varying the rate of rotation of the tubes to provide a throughput of 1200kg/hr and a dwell time in the dryer of about 60 minutes.

A vibratory feeding system may be provided to introduce undried particles into the tubes. Each tube may be provided with a separate loading shovel. A vibratory collector may be provided to collect dried particles for delivery to a mill.

The dried particles were milled using a roller mill.

The milled crumb was sieved and fractions were collected with dimensions of below 0.8mm, from 0.8 - 2.0mm and from 2.0 to 3.5mm. The water content of the crumb was determined to be 0.5 wt% to 0.6 wt%.

## Claims

1. A method of manufacture of a crumb comprising the steps of:
extruding a dough composition comprising flour, a gelling agent, optional further ingredients and water to form an extruded composition, wherein the gelling agent is uniformly distributed throughout the composition;
drying the extruded composition in a rotary dryer to form a dried composition, wherein the water content of the dried composition is from 0.1% to 1.5% by weight; and
milling the dried composition to form a crumb with a water content of 0.1% to 1.5% by weight.

2. A method as claimed in claim 1, wherein the rotary dryer comprises an inlet; an outlet; a passageway for the extruded composition, the passageway extending between the inlet and outlet; one or more drying units comprising a perforated cylindrical tube extending between the inlet and outlet and a screw extending axially of the tube, wherein one of the tube and the screw are rotatable to move extruded composition from the inlet to the outlet; and means for circulating drying air through the passageway.

3. A method as claimed in claim 1 or 2, wherein the crumb has a water content from 0.3% to 1.0% by weight.

4. A method as claimed in claim 4 wherein the crumb has a water content from 0.5% to 1.0% by weight.

5. A method as claimed in claim 5 wherein the crumb has a water content from 0.5% to 0.6% by weight.

6. A method as claimed in any preceding claim, wherein the crumb has a maximum dimension from 0.1 mm to 5 mm.

7. A method as claimed in any preceding claim wherein the gelling agent is a hydrocolloid.

8. A method as claimed in any preceding claim wherein the crumb contains from 0.06% to 0.4% by weight of the gelling agent.

9. A method as claimed in any preceding claim wherein the crumb contains from 0.08% to 3% by weight of the gelling agent.

10. A method as claimed in claim 9 wherein the crumb contains from 0.1% to 3% by weight of the gelling agent.

11. A method as claimed in any preceding claim wherein the gelling agent is selected from the group consisting of: natural gums, modified gums, gelatin, pectin, alginate, arabinogalactan, agar, carrageenan, furcellaran, modified starch and combinations thereof.

12. A method as claimed in claim 11 wherein the hydrocolloid is selected from the group consisting of natural gums and combinations thereof.

13. A method as claimed in claim 12 wherein the natural gum is selected from the group consisting of: guar gum, locust bean gum, gum Arabic, tragacanth, gum karaya, gum ghatti, xanthan gum and combinations thereof.

14. A method according to any one of the preceding claims, wherein the extruded pellets are dried in the rotary dryer by employing a counter current stream of hot air having a temperature in the range of 120°C-160°C.

15. A crumb comprising milled farinaceous particles of an extruded composition comprising flour, a gelling agent uniformly distributed throughout the crumb and optional further ingredients, wherein the total water content of the crumb is from 0.1% to 1.5% by weight.

## Patentansprüche

1. Verfahren zum Herstellen von Bröseln,
das die folgenden Schritte aufweist:
- Extrudieren einer Teigzusammensetzung, die Mehl, ein Geliermittel, wahlfreie weitere Bestandteile und Wasser aufweist, um eine extrudierte Zusammensetzung zu erzeugen, wobei das Geliermittel gleichmäßig innerhalb der Zusammensetzung verteilt wird;
- Trocknen der extrudierten Zusammensetzung in einem Rotationstrockner, um eine getrocknete Zusammensetzung zu erzeugen, wobei der Wassergehalt der getrockneten Zusammensetzung 0,1 bis 1,5 Gew.-% beträgt; und
- Mahlen der getrockneten Zusammensetzung, um Brösel mit einem Wassergehalt von 0,1 bis 1,5 Gew.-% zu erzeugen.

2. Verfahren nach Anspruch 1,
wobei der Rotationstrockner folgendes aufweist: einen Einlaß; einen Auslaß; einen Durchgang für die extrudierte Zusammensetzung, wobei der Durchgang zwischen dem Einlaß und dem Auslaß verläuft; eine oder mehrere Trocknungseinheiten, die ein perforiertes zylindrisches Rohr, das sich zwischen dem Einlaß und dem Auslaß erstreckt, und eine Schnecke aufweisen, die sich axial zu dem Rohr erstreckt, wobei die eine Komponente von dem Rohr und der Schnecke drehbar ist, um die extrudierte Zusammensetzung von dem Einlaß zu dem Auslaß zu bewegen; und eine Einrichtung zum Zirkulieren von Trocknungsluft durch den Durchgang.

3. Verfahren nach Anspruch 1 oder 2,
wobei die Brösel einen Wassergehalt von 0,3 bis 1,0 Gew.-% aufweisen.

4. Verfahren nach einem der einem der vorstehenden Ansprüche,
wobei die Brösel einen Wassergehalt von 0,5 bis 1,0 Gew.-% aufweisen.

5. Verfahren nach einem der vorstehenden Ansprüche,
wobei die Brösel einen Wassergehalt von 0,5 bis 0,6 Gew. % aufweisen.

6. Verfahren nach einem der vorstehenden Ansprüche,
wobei die Brösel eine maximale Abmessung von 0,1 mm bis 5 mm aufweisen.

7. Verfahren nach einem der vorstehenden Ansprüche,
wobei das Geliermittel ein Hydrokolloid ist.

8. Verfahren nach einem der vorstehenden Ansprüche,
wobei die Brösel 0,06 bis 0,4 Gew.-% des Geliermittels enthalten.

9. Verfahren nach einem der vorstehenden Ansprüche,
wobei die Brösel 0,08 bis 3 Gew.-% des Geliermittels enthalten.

10. Verfahren nach Anspruch 9,
wobei die Brösel 0,1 bis 3 Gew.-% des Geliermittels enthalten.

11. Verfahren nach einem der vorstehenden Ansprüche,
wobei das Geliermittel aus der Gruppe ausgewählt ist, die aus Naturgummis, modifizierten Gummis, Gelatine, Pectin, Alginat, Arabinogalactan, Agar, Carrageen, Furcellaran, modifizierter Stärke und Kombinationen davon besteht.

12. Verfahren nach Anspruch 11,
wobei das Hydrokolloid aus der Gruppe ausgewählt ist, die aus Naturgummis und Kombinationen davon besteht.

13. Verfahren nach Anspruch 12,
wobei der Naturgummi aus der Gruppe ausgewählt ist, die aus Guargummi, Johannisbrotkernmehl, Gummi arabicum, Tragant, Karaya-Gummi, Ghatti-Gummi, Xanthangummi und Kombinationen davon besteht.

14. Verfahren nach einem der vorstehenden Ansprüche,
wobei das extrudierte Granulat in dem Rotationstrockner getrocknet wird, indem ein Gegenstrom von Heißluft mit einer Temperatur im Bereich von 120 °C bis 160 °C verwendet wird.

15. Brösel, die gemahlene mehlartige Teilchen einer extrudierten Zusammensetzung aufweisen, die Mehl, ein gleichmäßig innerhalb der Brösel verteiltes Geliermittel und wahlfreie weitere Bestandteile aufweist, wobei der gesamte Wassergehalt der Brösel 0,1 bis 1,5 Gew.-% beträgt.

## Revendications

1. Méthode de fabrication de chapelure comprenant les étapes suivantes :
extrusion d'une composition de pâte comprenant de la farine, un agent gélifiant, des ingrédients additionnels optionnels, et de l'eau, pour former une composition extrudée, dans laquelle l'agent gélifiant est réparti de manière uniforme ;
séchage de la composition extrudée dans un séchoir rotatif pour former une composition séchée, dans laquelle la teneur en eau de la composition séchée est de 0,1% à 1,5% en poids ; et
broyage de la composition séchée pour former une chapelure présentant une teneur en eau de 0,1 % à 1,5% en poids.

2. Méthode selon la revendication 1, dans laquelle le séchoir rotatif comprend : une entrée ; une sortie ; un passage pour la composition extrudée, celui-ci s'étendant entre l'entrée et la sortie ; une ou plusieurs unités de séchage comprenant un tube perforé cylindrique s'étendant entre l'entrée et la sortie et une vis s'étendant de manière axiale par rapport au tube, dans laquelle l'un ou l'autre du tube ou de la vis peut être mis en rotation de manière à déplacer de la composition extrudée depuis l'entrée vers la sortie ; et des moyens pour faire circuler de l'air sec à travers le passage.

3. Méthode selon la revendication 1 ou la revendication 2, dans laquelle la chapelure présente une teneur en eau de 0,3 % à 1,0 % en poids.

4. Méthode selon la revendication 3, dans laquelle la chapelure présente une teneur en eau de 0,5 % à 1,0 % en poids..

5. Méthode selon la revendication 4, dans laquelle la chapelure présente une teneur en eau de 0,5 % à 0,6 % en poids.

6. Méthode selon l'une quelconque des revendications précédentes, dans laquelle la chapelure présente une dimension maximale de 0,1 mm à 5 mm.

7. Méthode selon l'une quelconque des revendications précédentes, dans laquelle l'agent gélifiant est un hydrocolloïde.

8. Méthode selon l'une quelconque des revendications précédentes, dans laquelle la chapelure contient de 0,06 % à 0,4 % en poids d'agent gélifiant.

9. Méthode selon l'une quelconque des revendications précédentes, dans laquelle la chapelure contient de 0,08 % à 3 % en poids d'agent gélifiant.

10. Méthode selon la revendication 9, dans laquelle la chapelure contient de 0,1 % à 3 % en poids d'agent gélifiant.

11. Méthode selon l'une quelconque des revendications précédentes, dans laquelle l'agent gélifiant est choisi dans le groupe consistant en les gommes naturelles, les gommes modifiées, la gélatine, la pectine, l'alginate, l'arabinogalactane, la gomme agar, la gomme carragénane, la furcellarane, les amidons modifiés, et des combinaisons de ceux-ci.

12. Méthode selon la revendication 11, dans laquelle l'hydrocolloïde est choisi dans le groupe consistant en les gommes naturelles et des combinaisons de celles-ci.

13. Méthode selon la revendication 12, dans laquelle la gomme naturelle est choisie dans le groupe consistant en la gomme de guar, la gomme de caroube, la gomme arabique, la gomme adragante, la gomme karaya, la gomme ghatti, la gomme xanthane, et des combinaisons de celles-ci.

14. Méthode selon l'une quelconque des revendications précédentes, dans laquelle les granulés extrudés sont séchés dans le séchoir rotatif par l'utilisation d'un flux d'air chaud à contre-courant présentant une température dans la gamme de 120°C à 160°C.

15. Chapelure comprenant des particules farinées broyées d'une composition extrudée comprenant de la farine, un agent gélifiant réparti de manière uniforme dans la chapelure, et d'autres ingrédients optionnels additionnels, dans laquelle la teneur totale en eau de la chapelure est de 0,1 % à 1,5 % en poids.
